(19) **Europäisches Patentamt / European Patent Office / Office européen des brevets**

(11) **EP 3 809 556 A1**

(12) # EUROPEAN PATENT APPLICATION
published in accordance with Art. 153(4) EPC

(43) Date of publication:
**21.04.2021 Bulletin 2021/16**

(21) Application number: **19819501.8**

(22) Date of filing: **12.06.2019**

(51) Int Cl.:
*H02J 7/35* $^{(2006.01)}$    *H01M 2/10* $^{(2006.01)}$
*H01M 2/34* $^{(2006.01)}$    *H01M 4/505* $^{(2010.01)}$
*H01M 4/525* $^{(2010.01)}$    *H01M 4/58* $^{(2010.01)}$

(86) International application number:
**PCT/JP2019/023338**

(87) International publication number:
**WO 2019/240192 (19.12.2019 Gazette 2019/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.06.2018   JP 2018113919**
**28.03.2019   JP 2019063937**

(71) Applicant: **Tohoku University**
**Sendai-shi, Miyagi 980-8577 (JP)**

(72) Inventors:
• **SHIRAKATA Masato**
  **Sendai-shi, Miyagi 980-8577 (JP)**
• **DATE Tomohide**
  **Sendai-shi, Miyagi 980-8577 (JP)**
• **HASEGAWA Fumihiko**
  **Sendai-shi, Miyagi 980-8577 (JP)**
• **HATAKEYAMA Kensuke**
  **Sendai-shi, Miyagi 980-8577 (JP)**
• **HIKICHI Masaaki**
  **Tagajyo-shi, Miyagi 985-8589 (JP)**

(74) Representative: **Plasseraud IP**
**66, rue de la Chaussée d'Antin**
**75440 Paris Cedex 09 (FR)**

(54) **SOLAR POWER GENERATION AND STORAGE UNIT, AND SOLAR POWER GENERATION AND STORAGE SYSTEM**

(57)   A solar power generation and storage unit includes a solar panel, and a storage battery directly connected to the solar panel, in which a maximum charging voltage of the storage battery is equal to or less than a value of 10% larger than a maximum output operating voltage of the solar panel.

FIG. 1

## Description

[Technical Field]

The present invention relates to a solar power generation and storage unit and a solar power generation and storage system.

Priority is claimed on Japanese Patent Application No. 2018-113919, filed June 14, 2018, and Japanese Patent Application No. 2019-063937, filed March 28, 2019, the contents of which are incorporated herein by reference.

[Background Art]

Attention has been focused on solar power generation as renewable energy. Solar power generation is power generation using natural energy, and fluctuations in generated electric power due to environmental changes are inevitable. As one means for avoiding the influence of fluctuations in generated electric power, a solar panel and a storage battery are connected to each other. Surplus electric power is stored in the storage battery when the solar panel generates power, and the electric power stored in the storage battery is used when no electric power is generated.

A control device such as a power conditioner is provided between the solar panel and the storage battery. The control device controls over-discharge and over-charge of the storage battery and inhibits deterioration and thermal runaway of the storage battery.

For example, paragraph [0020] of Patent Literature 1 discloses that charge and discharge of a power storage module are controlled by a control device such as a power conditioner. Also, for example, Patent Literature 2 discloses connecting a plurality of converters between a solar power generation device and a storage battery.

[Citation List]

[Patent Literature]

[Patent Literature 1]

Japanese Unexamined Patent Application, First Publication No. 2017-60359

[Patent Literature 2]

Japanese Unexamined Patent Application, First Publication No. 2015-133870

[Summary of Invention]

[Technical Problem]

The control device controls an operating point of a solar power generation and storage unit. The operating point is a point at which the solar power generation and storage unit operates efficiently and is a combination of an operating voltage and an operating current. One method used when the control device determines the operating point is a maximum power point tracking (MPPT) method. According to the MPPT method, an appropriate operating point (optimal operating point) can be specified when an amount of sunlight is constant. On the other hand, when the amount of sunlight changes, the MPPT method may erroneously recognize an optimal operating point and select an operating point that provides poor power generation efficiency. Further, the control device itself consumes electric power and causes electric power loss. In other words, the control device provided to increase power generation efficiency of the solar panel actually causes a decrease in charging efficiency of the solar power generation and storage unit.

In addition, recombination of excited electrons and holes in a solar panel causes a decrease in power generation efficiency of the solar panel. The decrease in power generation efficiency of the solar panel causes a decrease in charging efficiency of the solar power generation and storage unit.

The present invention has been made in view of the above problems and an object of the present invention is to provide a solar power generation and storage unit and a solar power generation and storage system which can increase charging efficiency.

[Solution to Problem]

The present inventors have found that directly connecting a solar panel to a storage battery and controlling power generation of the solar panel with a voltage of the storage battery can increase charging efficiency of a solar power generation and storage unit. That is, the present invention provides the following means in order to solve the above problems.

(1) A solar power generation and storage unit according to a first aspect includes a solar panel and a storage battery directly connected to the solar panel, in which a maximum charging voltage of the storage battery is equal to or less than a value which is 10% larger than a maximum output operating voltage of the solar panel.

(2) In the solar power generation and storage unit according to the above aspect, a resistance value of the storage battery may be smaller than a parallel resistance in a parasitic resistance of the solar panel.

(3) In the solar power generation and storage unit according to the above aspect, the storage battery may include a storage element having a cathode including a cathode active material, an anode including an anode active material, and a separator sandwiched between the cathode and the anode, and the cathode active material may include a material whose crystal structure is maintained even in a state in which ions that contribute to charge and discharge are removed.

(4) In the solar power generation and storage unit according to the above aspect, the cathode active material may have a spinel structure.

(5) The solar power generation and storage unit according to the above aspect may further include a first cutoff element for cutting the solar panel off from the storage battery when the storage battery is over-charged.

(6) The solar power generation and storage unit according to the above aspect may further include a second cutoff element for cutting the storage battery off from an outside when the storage battery is over-discharged.

(7) In the solar power generation and storage unit according to the above aspect, the storage battery may include at least a cathode, an anode, and a first terminal, a second terminal, and a third terminal each of which is connected to the cathode or the anode, the first terminal and the third terminal may be separated from each other and connected to the cathode or the anode, and the second terminal may be connected to the cathode or the anode to which the first terminal and the third terminal are not connected.

(8) In the solar power generation and storage unit according to the above aspect, the storage battery includes a plurality of storage elements, at least one of the plurality of storage elements includes at least a first terminal, a second terminal, and a third terminal, the first terminal connects one of the cathode and the anode to the solar panel, the second terminal connects the cathode or the anode to which the first terminal is not connected, to another storage element from the plurality of storage elements, and the third terminal connects the cathode or the anode to which the first terminal is connected, to an outside.

(9) A solar power generation and storage system according to a second aspect includes a plurality of the solar power generation and storage units according to the above aspect.

(10) In the solar power generation and storage system according to the above aspect, the plurality of solar power generation and storage units may be connected to an outside via a common external wiring, and the external wiring may include a reverse flow prevention element.

[Advantageous Effects of Invention]

The solar power generation and storage unit and the solar power generation and storage system according to the above aspect can increase charging efficiency of the storage battery.

[Brief Description of Drawings]

Fig. 1 is a schematic diagram of a solar power generation and storage unit according to the present embodiment.

Fig. 2 is a graph showing I-V characteristics of a solar panel.

Fig. 3 is an equivalent circuit diagram of the solar panel.

Fig. 4 is a graph showing a relationship between a resistance value of a storage battery and a parallel resistance in a parasitic resistance of the solar panel.

Fig. 5 shows changes in panel voltage with the lapse of time in solar power generation and storage units according to Example 1 and Comparative Example 1.

Fig. 6 shows changes in panel current with the lapse of time in the solar power generation and storage units according to Example 1 and Comparative Example 1.

Fig. 7 shows changes in power generation efficiency with the lapse of time in the solar power generation and storage units according to Example 1 and Comparative Example 1.

Fig. 8 shows an improvement rate of the power generation efficiency of the solar power generation and storage unit according to Example 1 with respect to the solar power generation and storage unit according to Comparative Example 1.

Fig. 9 is a graph showing an amount of electric power charged in the storage battery when the solar panel is directly connected to the storage battery.

Fig. 10 is a graph showing a change with the lapse of time in the amount of electric power charged in the storage battery when the solar panel is directly connected to the storage battery.

Fig. 11 is a schematic diagram of a storage element used in the solar power generation and storage unit according to the present embodiment.

Fig. 12 is a diagram schematically showing a crystal structure of a cathode active material.

Fig. 13 is a diagram showing an example of a switching element.

Fig. 14 is a diagram showing another example of the switching element.

Fig. 15 is a schematic diagram of a solar power generation and storage unit according to a second embodiment.

Fig. 16 is a schematic diagram of a storage element used in the solar power generation and storage unit according to the second embodiment.

Fig. 17 is a diagram showing a specific connection relationship between storage elements in the solar power generation and storage unit according to the second embodiment.

Fig. 18 is a diagram schematically showing a solar power generation and storage system according to a third embodiment.

[Description of Embodiments]

Hereinafter, the present embodiment will be described in detail with reference to the drawings as appropriate. The drawings used in the following description may show featured portions in an enlarged manner for convenience in order to make features of the present invention easy to understand, and dimensional ratios of the components may be different from actual ones. Materials, dimensions, and the like illustrated in the following description are merely examples, and the present invention is not limited thereto and can be implemented via appropriate modifications without departing from the scope of the present invention.

"First embodiment"

(Solar power generation and storage unit)

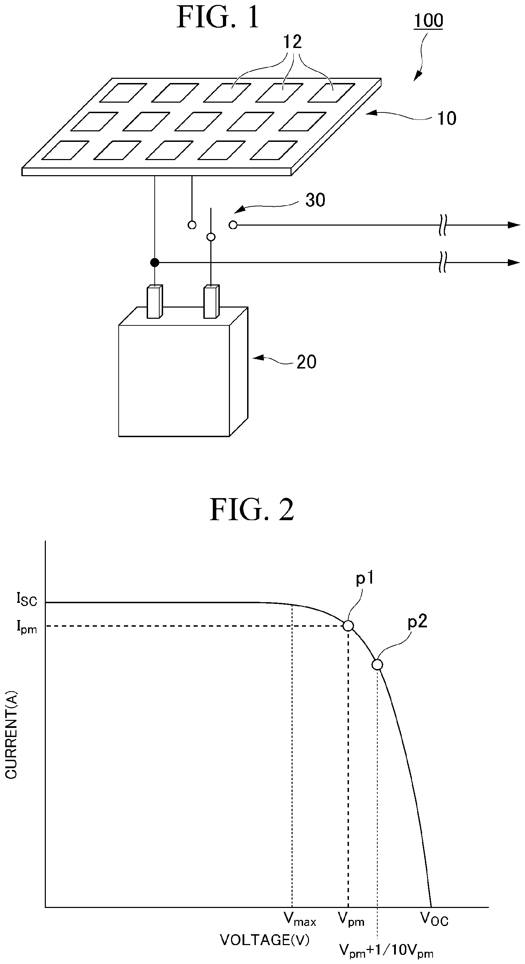

Fig. 1 is a schematic diagram of a solar power generation and storage unit 100 according to the present embodiment. The solar power generation and storage unit 100 includes a solar panel 10 and a storage battery 20. The solar panel 10 and the storage battery 20 are directly connected to each other via a wiring. Being directly connected means that there is no control circuit for controlling operations thereof (for example, an operating voltage). When the solar panel 10 and the storage battery 20 are directly connected to each other, the solar panel 10 is controlled with a voltage of the storage battery 20. An operating voltage of the solar panel 10 depends on the voltage of the storage battery 20. An element such as a switching element 30 that does not define a potential may be connected between the solar panel 10 and the storage battery 20.

The solar panel 10 has a plurality of cells 12 (see Fig. 1). Each cell 12 has an output voltage of about 1 V (about 0.8 V for crystalline silicon). By connecting the plurality of cells 12 to each other, an output voltage of the solar panel 10 increases.

Fig. 2 is a graph showing I-V characteristics of the solar panel 10. The I-V characteristics of the solar panel 10 show that a current droops as a voltage increases. $I_{sc}$ is a short-circuit current, and $V_{oc}$ is an open-circuit voltage. p1 is an optimal operating point. The optimal operating point p1 indicates a combination of an output voltage and an output current of the solar panel 10 when the solar panel 10 exhibits a maximum output. A voltage at the optimal operating point p1 is called a maximum output operating voltage $V_{pm}$, and a current at the optimal operating point p1 is called a maximum output operating current $I_{pm}$. When the solar panel 10 operates at the optimal operating point p1, the output becomes the maximum.

The storage battery 20 includes a plurality of cells (storage elements). A voltage of one cell is, for example, 3.0 V or more and 4.2 V or less. A maximum charging voltage $V_{max}$ of the storage battery 20 is a value obtained by adding voltages of the cells constituting the storage battery 20.

The maximum charging voltage $V_{max}$ of the storage battery 20 is set to be equal to or less than a value which is 10% larger than the maximum output operating voltage $V_{pm}$ of the solar panel 10, and preferably set to be equal to or less than the maximum output operating voltage $V_{pm}$ of the solar panel 10. The value 10% larger than the maximum output operating voltage $V_{pm}$ is a voltage at an operating point p2 in Fig. 2. The maximum output operating voltage $V_{pm}$ is a voltage in a standard state defined in the "method for measuring the output of a crystalline solar cell module" of the JIS standard (JIS C 8914). Fig. 2 shows an example of a positional relationship between the maximum charging voltage $V_{max}$ of the storage battery 20 and the maximum output operating voltage $V_{pm}$ in the I-V characteristics of the solar panel 10. The maximum charging voltage $V_{max}$ of the storage battery 20 is preferably set to be equal to or larger than a value which is 50% smaller than the maximum output operating voltage $V_{pm}$ of the solar panel 10, more preferably set to be equal to or larger than a value which is 40% smaller than the maximum output operating voltage $V_{pm}$ of the solar panel 10, and even more preferably set to be equal to or larger than a value which is 30% smaller than the maximum output operating voltage $V_{pm}$ of the solar panel 10.

The maximum charging voltage $V_{max}$ of the storage battery 20 can be set by adjusting the number of connected cells constituting the storage battery 20. For example, when a charging voltage of a single cell constituting the storage battery 20 is 4.1 V and the maximum output operating voltage $V_{pm}$ is 20 V, the number of cells constituting the storage battery 20 is set to four (the maximum charging voltage is 16.4 V).

The maximum charging voltage $V_{max}$ of the storage battery 20 may be set in relation to the open-circuit voltage $V_{oc}$ of the solar panel. For example, the open-circuit voltage $V_{oc}$ of the solar panel 10 is preferably set to 100% or more and 300% or less of the maximum charging voltage $V_{max}$ of the storage battery 20, more preferably set to 120% or more and 300% or less thereof, even more preferably set to 120% or more and 200% or less thereof, and particularly preferably set to 130% or more and 160% or less thereof.

The maximum charging voltage $V_{max}$ of the storage battery 20 is preferably 60 V or less, and more preferably 30 V or less. The solar panel 10 and the storage battery 20 are directly connected to and integrated with each other. Even when the open-circuit voltage $V_{oc}$ of the solar panel 10 is high, the potential of the solar panel 10 becomes the potential of the storage battery 20 (maximum charging voltage $V_{max}$) As a result, it is possible to inhibit a high voltage from being applied to a direct current (DC) wiring. If a voltage applied to the DC wiring is 60 V or less, wiring work and the like are easily done, and the risk of electric shock and fire decreases.

When the maximum charging voltage $V_{max}$ of the storage battery 20 is set with respect to the maximum output operating voltage $V_{pm}$ or the open-circuit voltage $V_{oc}$ of the solar panel 10, the electric power generated by the solar panel 10 can be charged into the storage battery 20 efficiently. The reason for this will be specifically described.

The I-V characteristic of the solar panel 10 varies depending on an amount of sunlight. For example, when the amount of sunlight increases, the short-circuit current $I_{sc}$ increases, and when the amount of sunlight decreases, the short-circuit current $I_{sc}$ decreases. When the solar panel 10 is controlled by the MPPT circuit, the MPPT circuit specifies the electric power at which the solar panel 10 has the maximum output while increasing the output voltage of the solar panel 10, and sets the optimal operating point p I of the solar panel 10. Electric power is determined by a product of voltage and current. When the amount of sunlight is constant, the short-circuit current $I_{sc}$ is constant, and the output electric power increases as the output voltage of the solar panel 10 increases, and shows a maximum output at a certain value. The output voltage of the solar panel 10 at which the electric power reaches the maximum output is the maximum output operating voltage $V_{pm}$. When the amount of sunlight is constant, an amount of current does not fluctuate due to the amount of sunlight, and thus the optimal operating point p1 of the solar panel 10 can be appropriately defined.

On the other hand, if the amount of sunlight fluctuates during the operation of the MPPT circuit, the amount of current changes independently of the increase in the output voltage of the solar panel 10. As a result, the voltage at which the electric power reaches the maximum output may not coincide with the maximum output operating voltage $V_{pm}$. For example, when the output voltage of the solar panel 10 is higher than the optimal operating point p1 and the amount of sunlight increases, the output current value at that point becomes larger than the output current value before the increase in the amount of sunlight. The electric power output at each operating point is a product of voltage and current. When the current value fluctuates, the output electric power also fluctuates, and the electric power at the operating point higher in voltage than the optimal operating point p1 may be larger than the electric power output at the optimal operating point p1. As a result, the MPPT circuit may erroneously recognize the optimal operating point p1 and erroneously recognize a voltage near the open-circuit voltage $V_{oc}$ as the maximum output operating voltage $V_{pm}$. Since the voltage value in this case is significantly lower than the maximum output operating voltage $V_{pm}$, the output electric power of the solar panel 10 is significantly reduced.

On the other hand, when the solar panel 10 and the storage battery 20 are directly connected to each other, the potential of the solar panel 10 is fixed at the potential of the storage battery 20. The solar panel 10 operates at a voltage equal to or lower than the maximum charging voltage $V_{max}$ of the storage battery 20. The maximum charging voltage $V_{max}$ is a value set in the storage battery 20, and is not affected by fluctuations in the amount of sunlight. The maximum charging voltage $V_{max}$ is set to be equal to or less than a value which is 10% higher than the maximum output operating voltage $V_{pm}$. That is, the operating voltage of the solar panel 10 does not fluctuate, and the voltage value at which the amount of output current is significantly reduced in the I-V characteristics is not mistaken for the optimal operating point. When the storage battery 20 is directly connected to the solar panel 10 after the maximum charging voltage $V_{max}$ of the storage battery 20 is set, the operating voltage of the solar panel 10 can be defined by the maximum charging voltage $V_{max}$ of the storage battery 20, and a decrease in output electric power of the solar panel 10 can be inhibited.

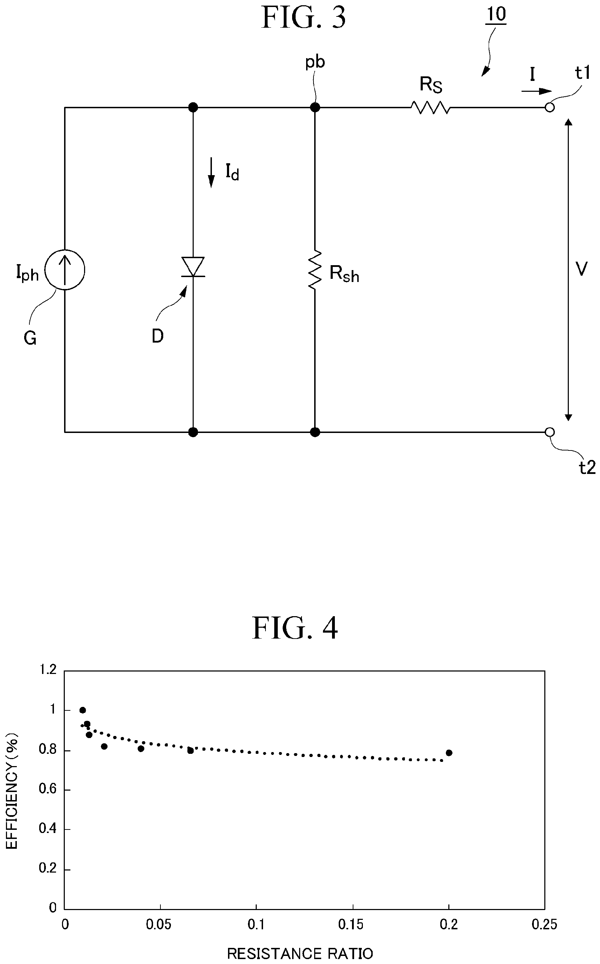

Further, Fig. 3 is an equivalent circuit diagram of the solar panel 10. The solar panel 10 is represented by a power generation unit G, a diode D, a parallel resistance $R_{sh}$, and a series resistance $R_s$. The parallel resistance $R_{sh}$ and the series resistance $R_s$ are parasitic resistances of the solar panel 10. A first terminal t1 and a second terminal t2 of the solar panel 10 are connected to a load. In the case of the solar power generation and storage unit 100 according to the present embodiment, the load is the storage battery 20.

The output current I output from the solar panel 10 is represented by the following equation.

$$I = I_{ph} - I_d - (V + R_s I)/R_{sh} \cdots (1)$$

In the equation (1), $I_{ph}$ is a photo-induced current. $I_{ph}$ is generated when light enters the solar panel 10. In the equation (1), $I_d$ is a diode current. Since each cell 12 of the solar panel 10 is a diode having a p-n junction, a diode current is generated according to an operating voltage. In the equation (1), $(V + R_s I)/R_{sh}$ is a current flowing through the parallel resistance. In the equation (1), $R_s$ is a resistance value of a series resistance, $R_{sh}$ is a resistance value of a parallel resistance, and V is an output voltage.

The equation (1) can be rewritten as the following equation (2).

$$I = (R_{sh} I_{ph} - R_{sh} I_d - V)/(R_s + R_{sh}) \cdots (2)$$

In the equation (2), $R_s + R_{sh}$ is a parasitic resistance, which can be regarded as a fixed value rather than a variable value. In the case of the solar power generation and storage unit 100 according to the present embodiment, the output voltage V is fixed at the maximum charging voltage $V_{max}$ of the storage battery 20, and can be regarded as substantially constant. Therefore, in the equation (2), it is the $R_{sh}(I_{ph}-I_d)$ part that affects the fluctuation of the output current I. The value of $R_{sh}(I_{ph}-I_d)$ decreases when exciton recombination occurs.

Here, the resistance value of the storage battery 20 connected to the first terminal t1 and the second terminal t2 is preferably smaller than the parallel resistance $R_{sh}$ in the parasitic resistance $(R_s+R_{sh})$ of the solar panel 10. The resistance value of the storage battery 20 is preferably equal to or less than 1/5 of the resistance value of the parallel resistance $R_{sh}$, more preferably equal to or less than 1/25 of the resistance value of the parallel resistance $R_{sh}$, even more preferably equal to or less than 1/50 thereof, and particularly preferably equal to or less than 1/100 thereof. Fig. 4 is a graph showing the relationship between the resistance value of the storage battery and the parallel resistance in the parasitic resistance of the solar panel. In Fig. 4, the vertical axis represents power generation efficiency of the solar panel 10 in the case in which the power generation efficiency of the solar panel 10 when the resistance value of the storage battery is 1/110 of the resistance value of the parallel resistance (the resistance ratio is 0.01) is standardized as 1, and the horizontal axis represents a resistance ratio between the resistance value of the storage battery and the resistance value of the parallel resistance. As shown in Fig. 4, when the resistance value of the storage battery becomes equal to or less than 1/50 of the resistance value of the parallel resistance (the resistance ratio is 0.04 or less), the power generation efficiency of the solar panel 10 rapidly increases. For example, when the cathode active material constituting the storage battery 20 is a ternary compound or an iron-olivine based one, the resistance value of the storage battery 20 becomes 1/5 to 1/25 of the resistance value of the parallel resistance $R_{sh}$.

When the resistance value of the storage battery 20 and the resistance value of the parallel resistance $R_{sh}$ satisfy the above relationship, most of the current that has reached a branch portion pb flows to the first terminal t1 side instead of the parallel resistance $R_{sh}$, and is output to an outside. When the amount of current flowing through the parallel resistance $R_{sh}$ increases, the temperature of the solar panel 10 increases, and the power generation efficiency of the solar panel 10 decreases. A decrease in the power generation efficiency of the solar panel 10 causes a decrease in the charging efficiency of the storage battery 20. Further, a rise in temperature of the solar panel 10 promotes recombination of excitons (electrons and holes) in the power generation unit G. Recombination of excitons causes a reduction in charging efficiency of the storage battery 20.

That is, when the maximum charging voltage $V_{max}$ of the storage battery 20 is set with respect to the maximum output operating voltage $V_{pm}$ or the open-circuit voltage $V_{oc}$ of the solar panel 10, parameters affecting the output current I from the solar panel 10 can be limited. Further, by making the resistance value of the storage battery 20 smaller than the resistance value of the parallel resistance $R_{sh}$, the current generated in the power generation unit G can efficiently flow to the first terminal t1 side, and recombination of excitons can be prevented. As a result, the power generation efficiency of the solar panel 10 can be increased, and the charging efficiency of the storage battery 20 can be increased, so that the electric power generated by the solar panel 10 can be efficiently charged into the storage battery 20.

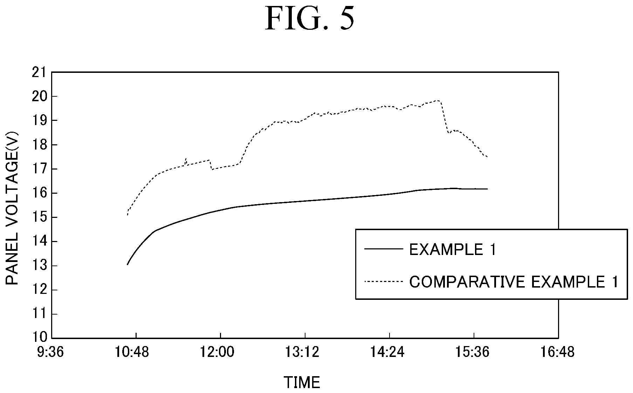

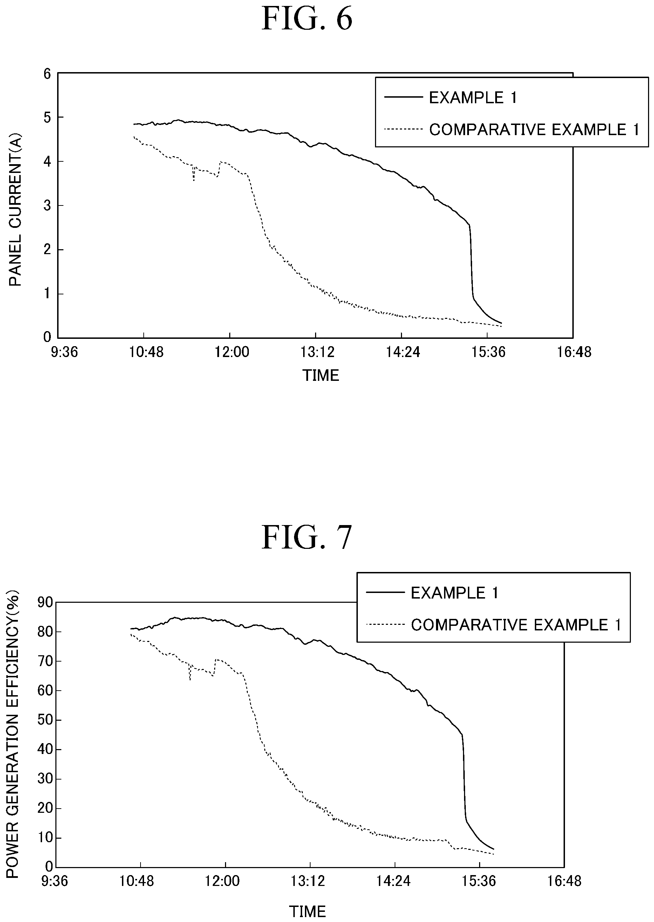

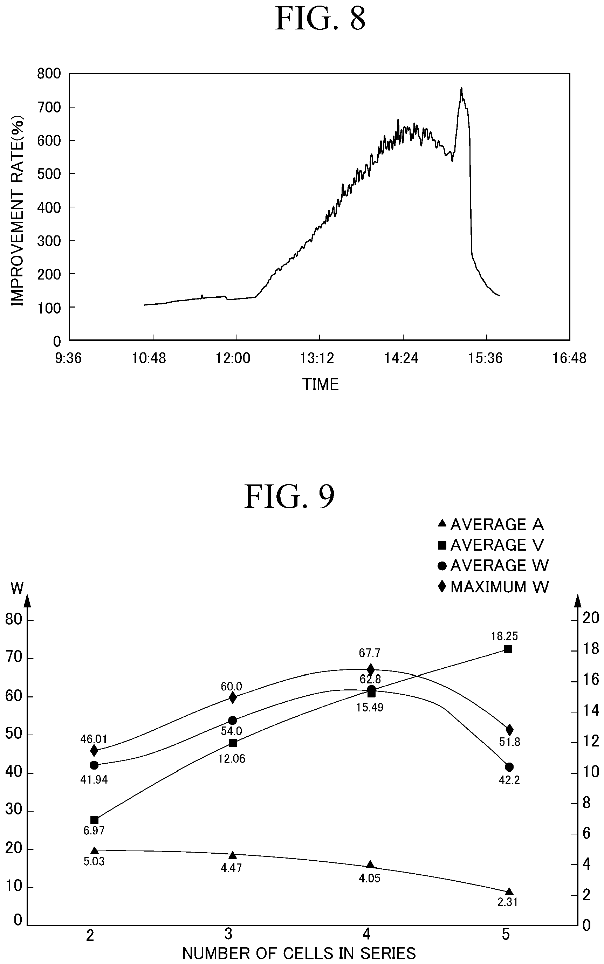

Figs. 5 to 8 are graphs showing a difference in power generation efficiency between the case in which the storage battery is directly connected to the solar panel (Example 1) and the case in which the solar panel is controlled using the MPPT circuit (Comparative Example 1). Fig. 5 shows changes in panel voltage with the lapse of time in solar power generation and storage units according to Example 1 and Comparative Example 1. Fig. 6 shows changes in panel current with the lapse of time in the solar power generation and storage units according to Example 1 and Comparative Example 1. Fig. 7 shows changes in power generation efficiency with the lapse of time in the solar power generation and storage units according to Example 1 and Comparative Example 1. Fig. 8 shows an improvement rate of the power generation efficiency of the solar power generation and storage unit according to Example 1 with respect to the solar power generation and storage unit according to Comparative Example 1. The time on the horizontal axis shown in Figs. 5 to 8 indicates the measurement time. In Figs. 5 to 8, the maximum charging voltage of the storage battery was 15.49 V, and the open voltage of the solar panel was 22.5 V. The maximum output operating voltage $V_{pm}$ of the solar panel was higher than the maximum charging voltage $V_{max}$ of the storage battery.

As shown in Fig. 5, the panel voltage of the solar panel changes every time. In the solar panel according to Example 1, the panel voltage of the solar panel is defined by the voltage of the storage battery. The panel voltage of the solar panel according to Example 1 gradually approaches the maximum charging voltage $V_{max}$ of the storage battery regardless of the amount of sunlight. On the other hand, in the solar panel in Comparative Example 1, the MPPT circuit varies the voltage value at each time according to the amount of sunlight.

Further, as shown in Fig. 6, the panel current of the solar panel also changes with the lapse of time. In the solar panel according to Example 1, the panel current amount gradually decreases as the potential difference between the solar panel and the storage battery decreases. The solar panel according to Example 1 outputs a large amount of panel current until the potential difference between the solar panel and the storage battery becomes zero. On the other hand, in the solar panel in Comparative Example 1, the output panel current amount sharply decreases after a certain period of time. This rapid phenomenon of panel current amount is due to exciton recombination. In the solar power generation and storage unit according to Comparative Example 1, the MPPT circuit may not be able to appropriately identify the optimal operating point p1, in which case the current flows to the parallel resistance $R_{sh}$ side (see Fig. 3), inducing recombination of excitons.

The power generation efficiency of the solar power generation and storage unit is converted by a product of panel voltage and panel current. As shown in Figs. 7 and 8, the power generation efficiency of the solar power generation and storage unit of Example 1 is higher than the power generation efficiency of the solar power generation and storage unit of Comparative Example 1. That is, as in Example 1, when the operating voltage of the solar panel is defined by the maximum charging voltage $V_{max}$ of the storage battery, the power generation efficiency of the solar power generation and storage unit is improved.

Further, Fig. 9 is a graph showing the amount of electric power stored in the storage battery of the solar power generation and storage unit. As the solar panel, a panel having a nominal maximum output of 100 W (18.5 V, 5.4 A), an open voltage of 22.5 V, and a short-circuit current of 5.9 A was used. The storage battery has a plurality of cells (storage elements), and the number of cells connected in series was changed. In the vertical axis of Fig. 9, the left column shows the amount of electric power (W) stored in the storage battery, and the right column shows the voltage (V) and the amount of current (A) applied to the storage battery. The horizontal axis in Fig. 9 is the number of cells constituting the storage battery.

As shown in Fig. 9, as the number of cells constituting the storage battery increases, the voltage (V) applied to the storage battery increases. The voltage (V) corresponds to the maximum charging voltage $V_{max}$ of the storage battery. On the other hand, the amount of electric power (W) stored in the storage battery increases until the number of connected cells is four, but decreases when the number of connected cells is five. This decrease is due to the fact that the amount of current (A) applied to the storage battery began to decrease when the number of connected cells reached five. The potential difference between the solar panel 10 and the storage battery 20 becomes smaller, and the amount of current (A) decreases.

The storage battery shown in Fig. 9 most efficiently charges the electric power generated by the solar panel when the number of connected cells is four. The maximum charging voltage of the storage battery when the number of connected cells is four is 15.49V The open-circuit voltage (22.5 V) of the solar panel is 145% of the maximum charging voltage of the storage battery. Also, the maximum charging voltage $V_{max}$ of the storage battery is lower than the maximum output operating voltage $V_{pm}$ of the solar panel. When the maximum charging voltage $V_{max}$ of the storage battery is set with respect to the maximum output operating voltage $V_{pm}$ or the open-circuit voltage $V_{oc}$ of the solar panel, electric power can be efficiently charged in the storage battery.

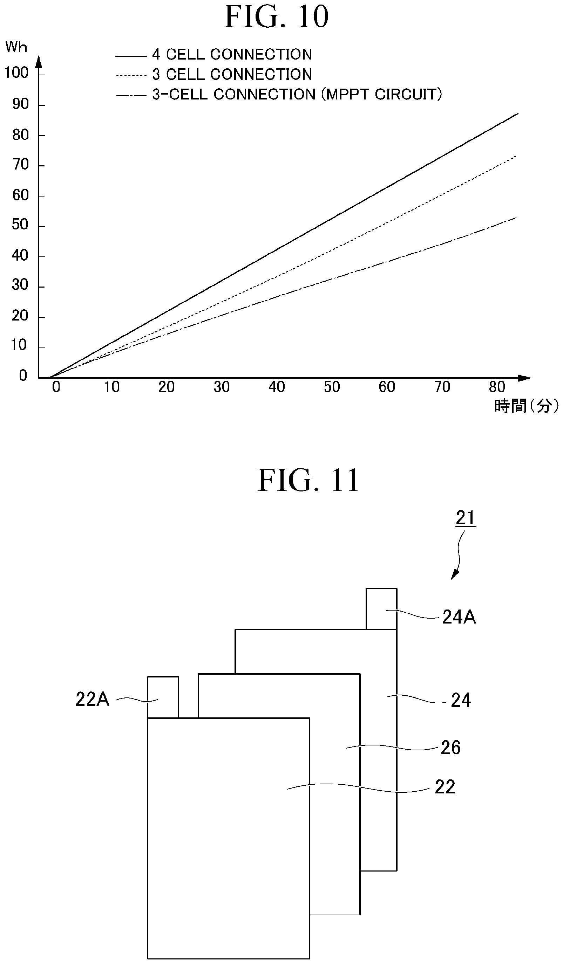

Fig. 10 is a graph showing a change with the lapse of time in the amount of electric power stored in the storage battery of the solar power generation and storage unit. The horizontal axis is the charging time, and the vertical axis is the amount of electric power stored in the storage battery per unit time. The solar panel and the storage battery have the same configuration as the experiment in Fig. 9. Also, the graph simultaneously shows an example (Comparative Example 1) in which a maximum power point tracking (MPPT) circuit as a control element is interposed between the solar panel and the storage battery.

As shown in Fig. 10, when the number of serial cells is four, electric power can be stored more efficiently than when the number of serial cells is three. This result correlates with the result shown in Fig. 9. In addition, when the solar panel is controlled via the MPPT circuit, the charging efficiency is lower than when the MPPT circuit is not provided. It is considered that the MPPT circuit causes electric power loss.

Next, each configuration of the solar power generation and storage unit 100 will be specifically described. Fig. 11 is a schematic diagram of a storage element 21 (cell) constituting the storage battery 20. The storage battery 20 has one or a plurality of storage elements 21. When the plurality of storage elements 21 are connected in series, the maximum charging voltage $V_{max}$ at which the storage battery 20 can be charged increases. The storage battery 20 is preferably a lithium ion secondary battery. The storage element 21 has a cathode 22, an anode 24, and a separator 26. A first terminal 22A is connected to the cathode 22, and a second terminal 24A is connected to the anode 24. The number of layers of the cathode 22 and the anode 24 is not limited as long as they are stacked with the separator 26 interposed therebetween.

The cathode 22 has a cathode current collector and a cathode active material formed on at least one surface of the cathode current collector. The cathode current collector is a conductor, for example, aluminum.

The cathode active material preferably includes a material whose crystal structure is maintained even in a state in which ions that contribute to charge and discharge are removed. When the storage battery 20 is a lithium ion secondary battery, "ions that contribute to charge and discharge" are lithium ions. The "material whose crystal structure is maintained even in a state in which ions that contribute to charge and discharge are removed" is, for example, a material having a spinel structure, an olivine structure, or a perovskite structure. The cathode active material is preferably, for example, $LiMnO_4$, $LiMn_{1.5}Ni_{0.5}O_4$, $LiFePO_4$, $LiMnPO_4$, or the like.

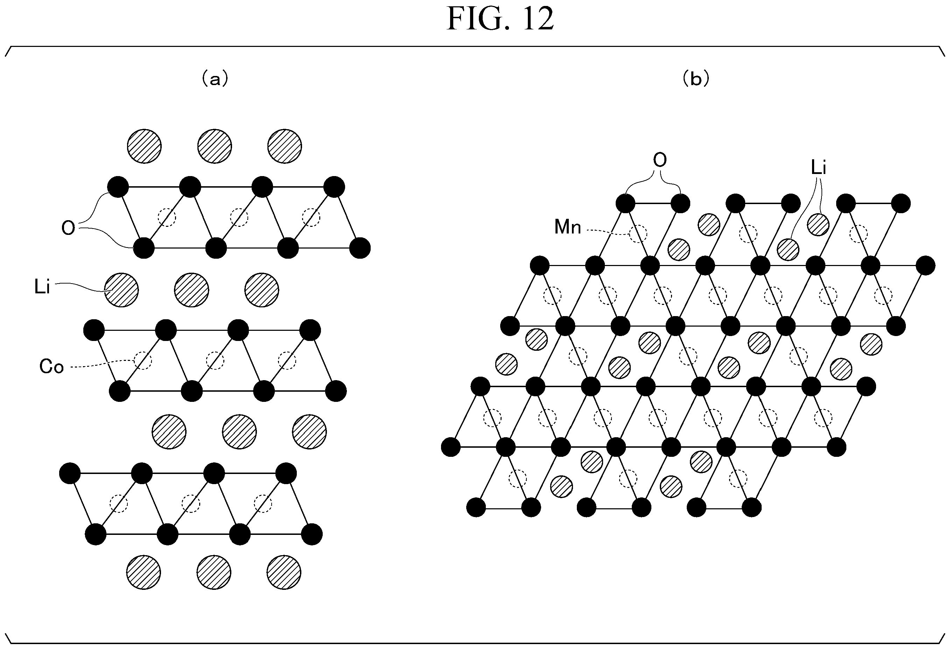

Fig. 12 is a diagram schematically showing the crystal structure of the cathode active material. Fig. 12(a) shows the crystal structure of $LiCoO_2$, and Fig. 12(b) shows the crystal structure of $LiMnO_4$. Figs. 12(a) and 12(b) correspond to crystal structures viewed in one direction.

$LiCoO_2$ has a structure in which a slab composed of an octahedron of Co and O and lithium are alternately stacked (see Fig. 12(a)). Lithium ions enter and exit between layers of the slab composed of the octahedron of Co and O during charge and discharge. $LiCoO_2$ cannot maintain a crystal structure when lithium ions are completely removed. In order to maintain the interlayer, it is necessary to leave about 30% of lithium ions even during charging (in a state in which lithium ions are eliminated). Therefore, $LiCoO_2$ does not correspond to the "material whose crystal structure is maintained even in a state in which ions that contribute to charge and discharge are removed."

On the other hand, $LiMnO_4$ is a compound having a spinel structure (see Fig. 12(b)). In $LiMnO_4$, octahedrons of Mn and O are bonded three-dimensionally. Lithium ions are inserted and removed between the octahedrons during charging and discharging. In $LiMnO_4$, even when lithium ions are completely removed, the octahedrons of Mn and O function as columns, and the crystal structure is maintained. Therefore, $LiMnO_4$ corresponds to the "material whose crystal structure is maintained even in a state in which ions that contribute to charge and discharge are removed."

In the "material whose crystal structure is maintained even in a state in which ions that contribute to charge and discharge are removed," the crystal structure is maintained even when the corresponding ions are removed. Therefore, the storage battery operates stably even if the amount of the corresponding ions (for example, lithium ions) contained in the cathode active material fluctuates. In other words, a storage battery including this material does not require control of the amount of corresponding ions in the crystal structure during charge and discharge. The storage battery including this material can perform a stable operation even if it is directly connected to a power supply having an unstable output voltage (for example, a solar panel) without going through a control device (for example, a power conditioner including an MPPT circuit). In addition, the storage battery using the cathode active material having the spinel structure has a small resistance value, and the resistance value of the storage battery 20 can be smaller than the resistance value of the parallel resistance $R_{sh}$.

The anode 24 has an anode current collector and an anode active material formed on at least one surface of the anode current collector. The anode current collector is a conductor, for example, aluminum, copper, or nickel.

As the anode active material, a known active material can be used. Also, the anode active material preferably includes a material whose crystal structure is maintained even in a state in which ions that contribute to charge and discharge are removed. The anode active material is preferably, for example, graphite, lithium titanium oxide having a spinel structure $Li_4Ti_5O_{12}$: LTO), or lithium vanadium oxide ($LiVO_2$, $Li_{1.1}V_{0.9}O_2$). Further, graphite is identical to Fig. 12(a) in that lithium ions are inserted and desorbed between layers, but the crystal structure is maintained even when lithium ions are completely eliminated.

The separator 26 is sandwiched between the cathode 22 and the anode 24. As the separator 26, a known separator can be used. For example, for the separator 26, a film of polyolefin such as polyethylene or polypropylene, cellulose, polyester, polyacrylonitrile, polyamide or the like can be used.

The storage battery 20 may use the storage element 21 as a single unit (single cell) or may connect and use a plurality of storage elements 21 (a plurality of cells). When a plurality of storage elements 21 are connected in series, the maximum charging voltage $V_{max}$ at which the storage battery 20 can be charged increases.

The switching element 30 switches, for example, between three states. In a first state, the solar panel 10 and the storage battery 20 are connected to each other, and the electric power generated by the solar panel 10 is charged in the storage battery 20. In a second state, the solar panel 10 is connected to the outside, and the electric power generated by the solar panel 10 is directly output to the outside. In a third state, the storage battery 20 is connected to the outside, and the electric power charged in the storage battery 20 is discharged. The switching element 30 changes the connection state according to the amount of sunlight. For example, if the amount of sunlight is large and excessive electric power is generated, the connection state of the switching element 30 is set to the first state or the second state, and the storage battery 20 is charged with the excessive amount while the electric power generated in the solar panel 10 is output to the outside.

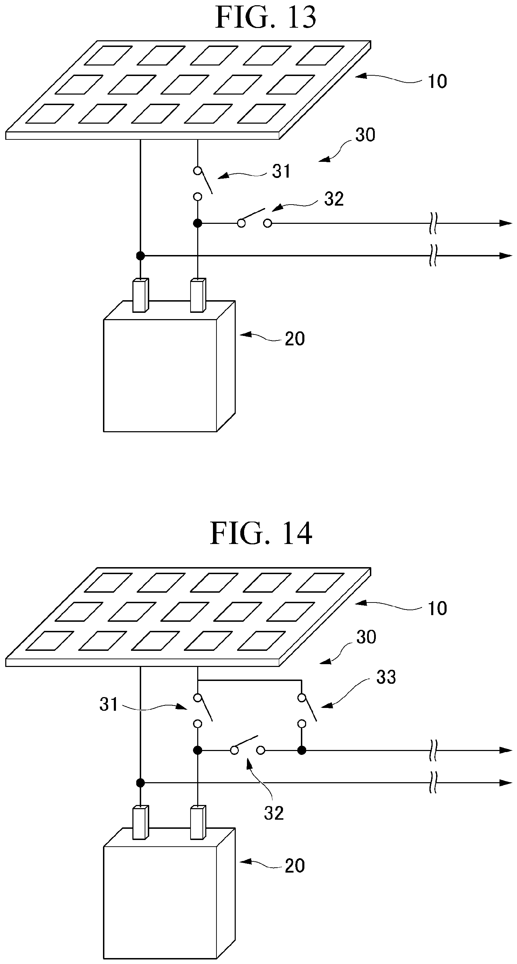

Figs. 13 and 14 are diagrams showing specific examples of the switching element 30. The switching element 30 shown in Fig. 13 includes a first cutoff element 31 and a second cutoff element 32. The first cutoff element 31 cuts off a connection (the first state) between the solar panel 10 and the storage battery 20. The first cutoff element 31 inhibits further charging (over-charging) from a fully charged state. The second cutoff element 32 cuts off a connection (third state) between the storage battery 20 and the outside. The second cutoff element 32 inhibits over-discharging.

The switching element 30 illustrated in Fig. 14 includes the first cutoff element 31, the second cutoff element 32, and a third cutoff element 33.

When the first cutoff element 31 and the second cutoff element 32 are open and the third cutoff element 33 is connected, the electric power generated by the solar panel 10 is directly output to the outside.

When the second cutoff element 32 and the third cutoff element 33 are open and the first cutoff element 31 is connected, the electric power generated by the solar panel 10 is charged in the storage battery 20.

When the first cutoff element 31 and the third cutoff element 33 are open and the second cutoff element 32 is connected, the electric power charged in the storage battery 20 is output to the outside.

When the first cutoff element 31 is open and the second cutoff element 32 and the third cutoff element 33 are connected, an amount of shortage is output from the storage battery 20 to the outside while the electric power generated by the solar panel 10 is output to the outside.

When the second cutoff element 32 is open and the first cutoff element 31 and the third cutoff element 33 are connected, an amount of surplus can be charged in the storage battery 20 while the electric power generated by the solar panel 10 is output to the outside.

When the third cutoff element 33 is open and the first cutoff element 31 and the second cutoff element 32 are connected, the electric power generated by the solar panel 10 can be output to the outside while being stored in the storage battery 20.

When the solar panel 10 and the storage battery 20 are connected to each other as shown in Fig. 14, the output voltage can be kept constant by switching the first, second, and third cutoff elements 31, 32, and 33 even when a change in the external environment occurs.

The current output from the solar panel 10 and the storage battery 20 to the outside is DC. When connected to a DC-driven element, it can be used as it is. On the other hand, when connected to an AC-driven element, it is necessary to convert to an alternating current (AC). When an external element is driven by AC, it is preferable to provide a DC/AC converter between the solar power generation and storage unit 100 and the external element.

As described above, according to the solar power generation and storage unit 100 according to the first embodiment, the electric power generated by the solar panel 10 can be transmitted to the directly connected storage battery 20, and can be efficiently stored in the storage battery 20.

"Second embodiment"

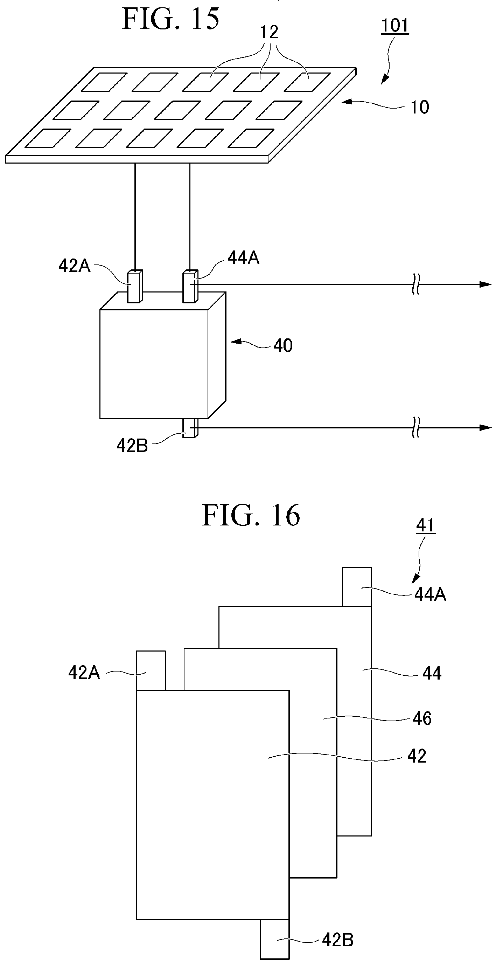

Fig. 15 is a schematic diagram of a solar power generation and storage unit 101 according to a second embodiment. The solar power generation and storage unit 101 according to the second embodiment is different from the solar power generation and storage unit 100 according to the first embodiment in that it includes a storage battery 40 having a different configuration and the switching element 30 is not provided. Other configurations are the same as those of the solar power generation and storage unit 100 according to the first embodiment, and descriptions of the same configurations will be omitted.

Fig. 16 is a schematic diagram of a storage element 41 included in the storage battery 40 used in the solar power generation and storage unit according to the second embodiment. The storage element 41 is preferably a lithium ion secondary battery. The storage element 41 includes a cathode 42, an anode 44, and a separator 46. The storage element 41 is different from the storage element 21 in that two terminals are connected to the cathode 42. In other respects, the storage element 21 and the storage element 41 are the same. A first terminal 42A and a third terminal 42B are separately connected to the cathode 42, and a second terminal 44A is connected to the anode 44. The first terminal 42A and the third terminal 42B are separated from each other.

As shown in Fig. 15, the first terminal 42A and the second terminal 44A of the storage element 41 are connected to the solar panel 10, and the second terminal 44A and the third terminal 42B are connected to the outside. The storage element 41 can be discharged via the second terminal 44A and the third terminal 42B while being charged via the first terminal 42A and the second terminal 44A.

The storage element 41 can keep a voltage (discharging voltage) output to the outside constant even if a voltage (charging voltage) supplied from the solar panel 10 fluctuates. There are two possible reasons.

A first reason is that a cathode active material exists between the first terminal 42A and the third terminal 42B. A potential of the cathode 42 of the storage element 41 varies depending on a content of conductive ions (lithium ions) contained in the cathode active material. That is, the potential of the cathode 42 of the storage element 41 is limited by an amount of movement of the conductive ions regardless of an externally applied charging voltage. That is, even if a charging voltage at the first terminal 42A fluctuates, a voltage fluctuation attenuates due to the movement of the conductive ions in the cathode active material. As a result, the voltage fluctuation is inhibited when reaching the third terminal 42B, and the discharging voltage becomes constant.

A second reason is a difference in impedance between the solar panel 10 and the storage element 41. Generally, an impedance of the solar panel 10 is higher than an impedance of the storage element 41. That is, a fluctuation amount of the charging voltage supplied from the solar panel 10 via a thin wiring is reduced in the storage element 41 having a sufficiently wide area. As a result, a voltage fluctuation is inhibited when reaching the third terminal 42B, and the discharging voltage becomes constant.

The first terminal 42A and the third terminal 42B are preferably provided on different sides when a shape of the cathode 42 in a plan view is rectangular. By securing a distance between the first terminal 42A and the third terminal 42B, a fluctuation of the charging voltage can be sufficiently inhibited.

On the other hand, when the shape of the cathode 42 in a plan view is rectangular, the first terminal 42A and the third terminal 42B may be provided on the same side. However, when the first terminal 42A and the third terminal 42B are on the same side, the cathode active material connecting between the first terminal 42A and the third terminal 42B may be peeled off for some reason. In this case, the fluctuation of the charging voltage input from the first terminal 42A via the cathode current collector having excellent conductivity may be transmitted to the third terminal 42B. Even in this case, the first terminal 42A and the third terminal 42B are preferably separated from each other by a predetermined distance or more in order to sufficiently reduce the fluctuation of the charging voltage.

The predetermined distance is determined by a noise absorbing capacity determined by a ratio between an inter-terminal resistance and an internal resistance of the storage element 41. The inter-terminal resistance R is determined by $R=\rho \times L/A$. Here, $\rho$ is a specific resistance of a combined resistance of the cathode current collector and the cathode active material, L is a distance between the first terminal 42A and the third terminal 42B, and A is a cross-sectional area of the cathode current collector in which the cathode active material is peeled off and exposed. Therefore, assuming that the internal resistance of the storage element 41 is R', R/R'x100 becomes the noise absorbing ability. $R/R' \times 100$ is preferably 50% or more, more preferably 70% or more, even more preferably 90% or more. That is, the distance between terminals is preferably set such that a noise level is 50% or less, more preferably 30% or less, and even more preferably 10% or less. Also, the internal resistance R' corresponds to a combined resistance (parallel connection) of the cathode active material and the current collector.

For example, a case is considered in which the cathode current collector is aluminum having a specific resistance of 2.8 $\mu\Omega$cm and a thickness of 20 $\mu$m, and there is a non-formed region where the cathode active material has been peeled off between the first terminal 42A and the third terminal 42B with a width of 0.1 mm. In the storage element 41, the number of stacked cathodes is 30, and an internal resistance thereof is 2.8 m$\Omega$. In this case, when the distance between the first terminal 42A and the third terminal 42B is set to be 1 mm, the noise level drops to 30%, when the distance is set to be 2 mm, the noise level drops to 20%, and, when the distance is set to be 4 mm, the noise level drops to 10%.

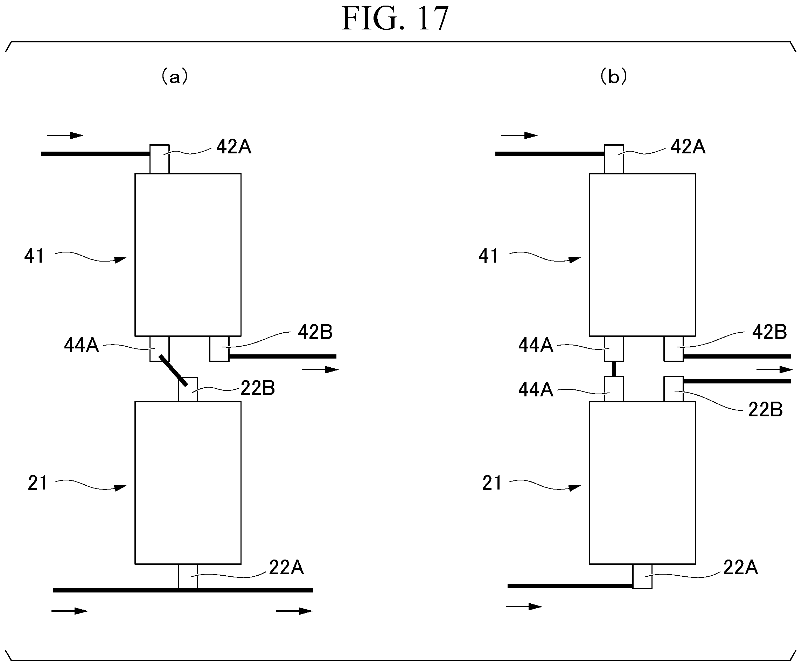

In the case in which the above-described three-terminal type storage element is used, the storage elements 41 are preferably connected to each other as shown in Fig. 17. Fig. 17 is a diagram showing a specific connection relationship of the storage elements 41. Fig. 17(a) shows an example in which a two-terminal type storage element 21 and a three-terminal type storage element 41 are connected to each other. Fig. 17(b) shows an example in which a plurality of three-terminal type storage elements 41 are connected to each other. In any case, the charging voltage input from solar panel 10 is output to the outside via the storage elements 21 and 41. That is, even if the voltage (charging voltage) supplied from the solar panel 10 fluctuates, the voltage output to the outside (discharging voltage) can be kept constant.

Also, although an example in which the third terminal 42B is provided on the cathode 42 side has been described above, the third terminal 42B may be provided on the anode 44 side. Further, three or more terminals may be provided simultaneously.

As described above, according to the solar power generation and storage unit 101 according to the second embodiment, the same effects as those of the solar power generation and storage unit 100 according to the first embodiment can be obtained. Further, according to the solar power generation and storage unit 101 according to the second embodiment, charge and discharge can be performed simultaneously, and even when the voltage (charging voltage) supplied from the solar panel 10 fluctuates, the voltage output to the outside (discharging voltage) can be kept constant.

"Third embodiment"

(Solar power generation and storage system)

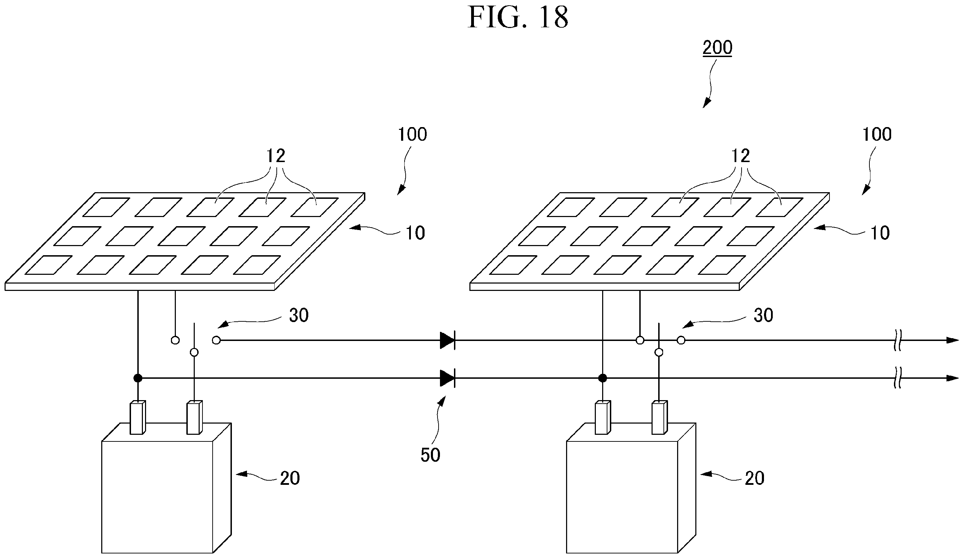

Fig. 18 is a diagram schematically showing a solar power generation and storage system according to a third embodiment. The solar power generation and storage system 200 shown in Fig. 18 includes a plurality of solar power generation and storage units 100 according to the first embodiment.

In the solar power generation and storage system 200 shown in Fig. 18, external wirings for outputting the voltage from the solar power generation and storage unit 100 to the outside are shared. The wirings may be provided separately, but by sharing the wirings, the wirings can be simplified.

On the other hand, when the external wirings are shared as shown in Fig. 18, it is preferable to provide a reverse flow prevention element 50 between the solar power generation and storage units 100. As the reverse flow prevention element 50, a diode or the like can be used.

The amount of electric power generated by the solar panel 10 varies depending on the amount of sunlight. The amount of electric power generated by each solar panel 10 and the amount of electric power stored in the storage battery 20 differ for each solar power generation and storage unit 100. By providing the reverse flow prevention element 50, it is possible to prevent a current from flowing between the solar power generation and storage units 100. Further, since the electric power is discharged sequentially from the solar power generation and storage unit 100 having the highest potential, the voltage of the entire solar power generation and storage system 200 becomes uniform.

Further, in the case of adding more solar power generation and storage units 100, when a failed solar power generation and storage unit 100 is replaced, there is no need to adjust the voltage of each solar power generation and storage unit 100. For that reason, even in the above case, it is not necessary to stop the entire solar power generation and storage system 200.

Also, the solar power generation and storage system 200 shown in Fig. 18 as it is can be used when connected to a DC-driven element. On the other hand, when connected to an AC-driven element, it is necessary to convert to AC. When an external element is driven by AC, it is preferable to provide a DC/AC converter between the solar power generation and storage system 200 and the external element.

Although the preferred embodiments of the present invention have been described in detail as described above, the present invention is not limited to any particular embodiments and various modifications and changes are possible within the scope of the present invention described in the claims.

[Reference Signs List]

10 Solar panel
12 cell
20, 40 Storage battery
21, 41 Storage element
22, 42 Cathode
24, 44 Anode
26, 46 Separator
22A, 42A First terminal
24A, 44A Second terminal
42B Third terminal
30 Switching element
50 Reverse flow prevention element
100 Solar power generation and storage unit
200 Solar power generation and storage system

**Claims**

1. A solar power generation and storage unit comprising:

   a solar panel; and
   a storage battery directly connected to the solar panel,
   wherein a maximum charging voltage of the storage battery is equal to or less than a value which is 10% larger than a maximum output operating voltage of the solar panel.

2. The solar power generation and storage unit according to claim 1, wherein a resistance value of the storage battery is smaller than a parallel resistance in a parasitic resistance of the solar panel.

3. The solar power generation and storage unit according to claim 1 or 2,
   wherein the storage battery includes a storage element having a cathode including a cathode active material, an anode including an anode active material, and a separator sandwiched between the cathode and the anode, and
   the cathode active material includes a material whose crystal structure is maintained even in a state in which ions that contribute to charge and discharge are removed.

4. The solar power generation and storage unit according to claim 3, wherein the cathode active material includes a spinel structure.

5. The solar power generation and storage unit according to any one of claims 1 to 4, further comprising a first cutoff element for cutting the solar panel off from the storage battery when the storage battery is overcharged.

6. The solar power generation and storage unit according to any one of claims 1 to 5, further comprising a second cutoff element for cutting the storage battery off from an outside when the storage battery is overdischarged.

7. The solar power generation and storage unit according to any one of claims 1 to 6,
   wherein the storage battery includes at least a cathode, an anode, and a first terminal, a second terminal, and a third terminal each of which is connected to the cathode or the anode,
   the first terminal and the third terminal are separated from each other and connected to the cathode or the anode, and
   the second terminal is connected to the cathode or the anode to which the first terminal and the third terminal are not connected.

8. The solar power generation and storage unit according to any one of claims 1 to 7,
   wherein the storage battery includes a plurality of storage elements,
   at least one of the plurality of storage elements includes at least a first terminal, a second terminal, and a third terminal,
   the first terminal connects one of the cathode and the anode to the solar panel, the second terminal connects the cathode or the anode to which the first terminal is not connected, to another storage element from the plurality of storage elements, and
   the third terminal connects the cathode or the anode to which the first terminal is connected, to an outside.

9. A solar power generation and storage system comprising a plurality of the solar power generation and storage units according to any one of claims 1 to 8.

10. The solar power generation and storage system according to claim 9,
    wherein the plurality of solar power generation and storage units are connected to an outside via a common external wiring, and
    the external wiring includes a reverse flow prevention

element.

# FIG. 1

# FIG. 2

# FIG. 3

# FIG. 4

# FIG. 5

# FIG. 6

# FIG. 7

# FIG. 8

# FIG. 9

▲ AVERAGE A
■ AVERAGE V
● AVERAGE W
◆ MAXIMUM W

# FIG. 10

Wh
- 4 CELL CONNECTION
- 3 CELL CONNECTION
- 3-CELL CONNECTION (MPPT CIRCUIT)

時間(分)

# FIG. 11

FIG. 12

(a)

(b)

# FIG. 13

# FIG. 14

## FIG. 15

## FIG. 16

# FIG. 17

（a）

（b）

# FIG. 18

EP 3 809 556 A1

## INTERNATIONAL SEARCH REPORT

| International application No. |
|---|
| PCT/JP2019/023338 |

**A. CLASSIFICATION OF SUBJECT MATTER**

Int.Cl. H02J7/35(2006.01)i, H01M2/10(2006.01)i, H01M2/34(2006.01)i, H01M4/505(2010.01)n, H01M4/525(2010.01)n, H01M4/58(2010.01)n

According to International Patent Classification (IPC) or to both national classification and IPC

**B. FIELDS SEARCHED**

Minimum documentation searched (classification system followed by classification symbols)
Int.Cl. H02J7/35, H01M2/10, H01M2/34, H01M4/505, H01M4/525, H01M4/58

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2008-48544 A (SHARP CORP.) 28 February 2008, paragraphs [0023], [0039]-[0043], fig. 1-2, 8 & US 2009/0302681 A1 paragraph [0120], fig. 1, 3, 15A & EP 1986306 A1 & CN 101375482 A | 1, 9<br>2-7, 10<br>8 |
| X<br>Y<br>A | JP 59-6730 A (MATSUSHITA ELECTRIC WORKS, LTD.) 13 January 1984, page 1, lower right column, line 1 to page 2, upper left column, line 3, fig. 1-2 (Family: none) | 1<br>2-7, 10<br>8 |
| Y | JP 2005-347187 A (SANYO ELECTRIC CO., LTD.) 15 December 2005, paragraph [0072] (Family: none) | 3-7, 10 |
| Y<br>A | JP 10-233201 A (SANYO ELECTRIC CO., LTD.) 02 September 1998, fig. 5 (Family: none) | 7, 10<br>8 |

☐ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 August 2019 (16.08.2019) | 27 August 2019 (27.08.2019) |

| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |
|---|---|

Form PCT/ISA/210 (second sheet) (January 2015)

**EP 3 809 556 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018113919 A
- JP 2019063937 A
- JP 2017060359 A
- JP 2015133870 A